(19) Europäisches Patentamt

European Patent Office

Office européen des brevets

(11) Veröffentlichungsnummer: **0 357 879 B1**

## (12) EUROPÄISCHE PATENTSCHRIFT

(45) Veröffentlichungstag der Patentschrift: **10.11.93**

(21) Anmeldenummer: **89109449.2**

(22) Anmeldetag: **25.05.89**

(51) Int. Cl.⁵: **G01L 3/16**, G01L 3/14

(54) **Vorrichtung zum Messen des von einem Prüfling abgegebenen und/oder aufgenommenen Drehmomentes.**

(30) Priorität: **07.09.88 DE 3830311**

(43) Veröffentlichungstag der Anmeldung:
**14.03.90 Patentblatt 90/11**

(45) Bekanntmachung des Hinweises auf die
Patenterteilung:
**10.11.93 Patentblatt 93/45**

(84) Benannte Vertragsstaaten:
**AT CH DE FR GB IT LI**

(56) Entgegenhaltungen:
**FR-A- 2 533 698**

(73) Patentinhaber: **Weinlich, Leopold**
**Industriestrasse 6**
**D-68799 Reilingen(DE)**

(72) Erfinder: **Weinlich, Leopold**
**Industriestrasse 6**
**D-68799 Reilingen(DE)**

(74) Vertreter: **Rüger, Rudolf, Dr.-Ing. et al**
**Patentanwälte**
**Dr.-Ing. R. Rüger**
**Dipl.-Ing. H.P. Barthelt**
**Webergasse 3**
**D-73728 Esslingen (DE)**

EP 0 357 879 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung geht aus von einer Vorrichtung zum Messen des von einem Prüfling abgegebenen und/oder aufgenommenen Drehmomentes, mit den Merkmalen des ersten Teiles des Anspruches 1.

Ein derartiges Bremsdynamometer ist aus der DE-OS 34 39 786 bekannt. Bei diesem Bremsdynamometer ist jedoch auch die Antriebs- und Bremseinrichtung in dem schwenkbar gehaltenen Gestell angeordnet, wobei das Ausgangszahnrad des Getriebes auf der Welle der Antriebs- und Bremseinrichtung sitzt.

Bei dem bekannten Bremsdynamometer dient das Getriebe dazu, eine Drehzahlanpassung zwischen der Antriebs- und Bremseinrichtung und dem an der Eingangswelle anzukuppelnden Prüfling zu gestatten. Infolge der Anordnung des Getriebes und der Antriebs- und Bremseinrichtung in dem Gestell führen die mechanischen Verluste, die zwangsläufig in den Lagern des Getriebes und dem Getriebe selbst auftreten, nicht zu einer Meßwertverfälschung, denn das durch die mechanischen Verluste des Getriebes hervorgerufene Moment wird als belastendes Moment für den Prüfling als Reaktionskraft an dem Gestell mittels der Kraftmeßeinrichtung mit erfaßt.

Diese bekannte Anordnung läßt sich so lange zufriedenstellend anwenden, als die Masse des Gestells samt Getriebe und Antriebs- und Bremseinrichtung nicht zu hoch wird. Bei größerer Masse müssen nämlich die Schwenklager, die das Gestell halten, so kräftig dimensioniert werden, daß sie Reibmomente entstehen lassen, die zu einer beträchtlichen Meßungenauigkeit führen können. Die Masse der Antriebs- und Bremseinrichtung ist aber im wesentlichen durch die Leistung festgelegt, für die die Vorrichtung ausgelegt ist.

Ausgehend hiervon ist es Aufgabe der Erfindung, die eingangs genannte Vorrichtung dahingehend zu verbessern, daß bei gegebener Leistung der Antriebs- und Bremseinrichtung schwächere Schwenklager zur Halterung des Gestells verwendet werden können.

Zur Lösung dieser Aufgabe ist die erfindungsgemäße Vorrichtung durch die Merkmale des Anspruches 1 gekennzeichnet. Die Herausnahme der Antriebs- und Bremseinrichtung aus dem schwenkbar gelagerten Gestell führt zu einer sehr erheblichen Verringerung der Masse, die in dem Gestell untergebracht ist. Die Schwenklager brauchen bei der neuen Anordnung deswegen nur noch die Masse des Getriebes zu tragen, die in aller Regel sehr viel kleiner ist als die Masse der Antriebs- und Bremseinrichtung, die je nach Anwendungswahl einfach eine Wasserwirbelbremse oder ein Elektromotor oder ähnliches sein kann. Schwächer dimensionierte Lager weisen ein geringeres Haft- und Reibmoment auf und verfälschen deswegen weniger die vom Reaktionsdrehmoment an der Kraftmeßeinrichtung hervorgerufene Querkraft. Außerdem wird die gemessene Kraft von der Masse der Antriebs- und Bremseinrichtung unabhängig, was insbesondere bei Wasserwirbelbremsen von Vorteil ist, bei denen die Bremsleistung über die Wasserfüllmenge gesteuert wird. Es ist deswegen nicht notwendig, zusätzlich auch noch die Masse der Anordnung zu messen, wie es sonst notwendig ist, weil die veränderte Masse zu einer Veränderung der Schwerpunktslage führt. Insbesondere bei pendelnd aufgehängten Bremsdynamometern führt eine Höhenänderung des Schwerpunkts zu einer Veränderung der Meßempfindlichkeit.

Eine besonders hohe Genauigkeit beim Messen des vom Prüfling auf genommenen oder abgegebenen Drehmomentes läßt sich erreichen, wenn die Eingangs- und die Ausgangswelle unter einem Winkel, vorzugsweise einem rechten Winkel, zueinander verlaufen. Wie sich durch einfache geometrische Überlegungen zeigen läßt, haben in diesem Falle die im Getriebe auftretenden Verluste keinerlei Einfluß auf die Drehmomentmessung an der Eingangswelle, da die Drehmomente an der Ausgangswelle in einer Ebene wirksam sind, die keine Querkraft an der Kraftmeßeinrichtung entstehen läßt. Dabei können je nach Gestaltung des Getriebes die Achsen der Ein- und der Ausgangswelle in einer gemeinsamen Ebene liegen oder sie können auch gegeneinander versetzt angeordnet sein. Ein Achsversatz besteht beispielsweise bereits dann, wenn ein Kegelradgetriebe mit Hypoidverzahnung eingesetzt wird.

Bei hängender Anordnung des Gestells kommen für die Ausgangswelle zwei Anordnungen in Betracht. Im einen Falle schneidet die Achse der Ausgangswelle die Schwenkachse, was ebenso zu definierten Kräfteverhältnissen führt wie eine andere Ausrichtung, bei der die Ausgangswelle horizontal liegt. Im ersteren Fall wird zur Ankupplung der Antriebs- und Bremseinrichtung ein Gelenk benötigt, das beim Messen, d.h. der Ausgleichsbewegung des Gestells, auf Knickung beansprucht wird, während im Falle der horizontal liegenden Ausgangswelle eine Ausgleichskupplung erforderlich ist, die einen Längenausgleich gestattet, während die winkelmäßige Änderung zu vernachlässigen ist.

Im Falle der die Schwenkachse schneidenden Anordnung der Ausgangswelle können als drehstarre Gelenkausgleichskupplungen Kreuzgelenke, homokinetische Gelenke oder ähnliches verwendet werden.

Im Falle der die Schwenkachse schneidenden Anordnung der Ausgangswelle kann die hierbei erforderliche drehstarre Gelenkausgleichskupplung gleichzeitig mit als Teil der Lagereinrichtung für die Schwenklagerung des Gestells herangezogen werden. Dies hat insbesondere den Vorteil, daß die drehstarre Gelenkausgleichskupplung keinerlei Längenausgleich erfordert, weil in keinem Falle eine statische Überbestimmung auftreten könnte, wie es der Fall wäre, wenn zusätzlich zu der drehstarren Gelenkausgleichskupplung zwei mit Abstand voneinander angeordnete Lager die Schwenklagereinrichtung bilden. Es ist sogar möglich, die Lagereinrichtung für das Gestell ausschließlich durch die drehstarre Gelenkausgleichskupplung zu bilden und die Momente um die Ausgangswelle von zwei parallel im Abstand zueinander verlaufenden Lenkern aufzunehmen, die parallel zu der Eingangswelle verlaufen und sich am Fundament abstützen.

In der Zeichnung sind Ausführungsbeispiele des Gegenstandes der Erfindung dargestellt. Es zeigen:

Fig. 1    eine Vorrichtung zum Messen des von einem Prüfling abgegebenen und/oder aufgenommenen Drehmomentes mit einem Getriebe, bei dem die Eingangs- und die Ausgangswelle parallel zueinander verlaufen, in einer Seitenansicht,

Fig. 2    die Vorrichtung nach Fig. 1 in einer Draufsicht, geschnitten entlang der Linie II-II nach Fig. 1,

Fig. 3    eine Vorrichtung zum Messen des von einem Prüfling abgegebenen und/oder aufgenommenen Drehmomentes, mit einem Getriebe, bei dem die Eingangs- und die Ausgangswelle rechtwinklig zueinander verlaufen, wobei die Ausgangswelle die Schwenkachse rechtwinklig schneidet,

Fig. 4    die Anordnung nach Fig. 3 in einer Ansicht von vorne, geschnitten entlang der Linie IV-IV,

Fig. 5    eine Vorrichtung zum Messen des von einem Prüfling abgegebenen und/oder aufgenommenen Drehmomentes, wobei die Eingangs- und die Ausgangswelle rechtwinklig zueinander verlaufen und die Ausgangswelle horizontal angeordnet ist,

Fig. 6    eine Vorrichtung ähnlich der nach Fig. 3, wobei die Schwenklagereinrichtung die drehstarre Gelenkausgleichskupplung zwischen dem Getriebe und der Brems- und/oder Antriebseinrichtung beinhaltet, in einer Seitenansicht und

Fig. 7 bis 9    eine Vorrichtung ähnlich der nach Fig. 3, wobei die Schwenklageeinrichtung ausschließlich von der drehstarren Gelenkausgleichskupplung zwischen dem Getriebe und der Antriebs- und/oder Bremseinrichtung gebildet ist, in einer Seitenansicht, einer Ansicht von vorne bzw. einer Draufsicht.

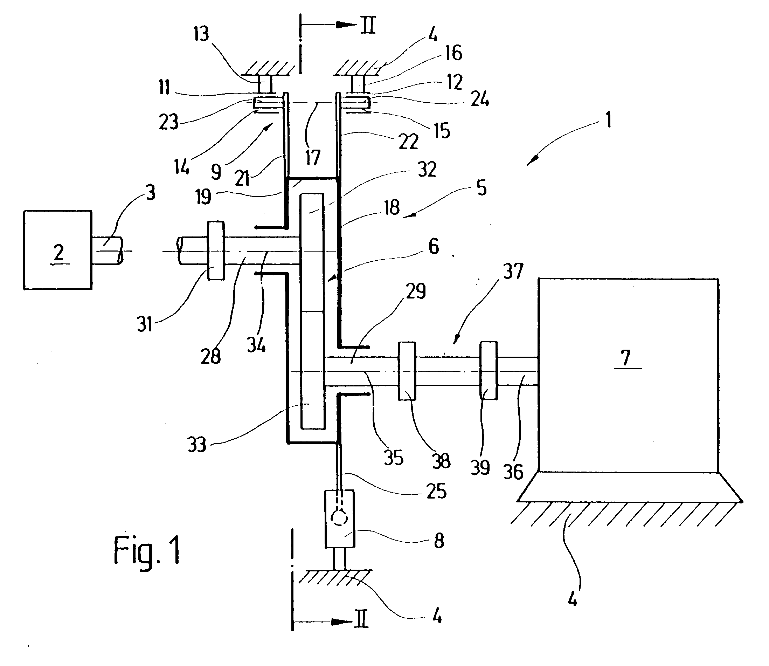

In Fig. 1 ist stark schematisiert eine Meßvorrichtung 1 zum Ermitteln des Drehmomentes veranschaulicht, das je nach Belastungssituation ein Prüfling 2 an seiner Ausgangswelle 3 entweder abgibt oder aufnimmt, je nachdem, ob die Meßvorrichtung 1 treibend oder bremsend wirkt. Die Meßvorrichtung 1 enthält ein schematisiertes Fundament 4, ein an dem Fundament 4 schwenkbar aufgehängtes Gestell 5 mit einem Getriebe 6 sowie eine ortsfest auf dem Fundament 4 verankerte Antriebs- und Bremseinrichtung 7 und eine ebenfalls ortsfest auf dem Fundament 4 angebrachte Kraftmeßeinrichtung 8, mit deren Hilfe das Reaktionsmoment des Gestells 5 gemessen wird.

Zur Lagerung des Gestells 5 ist eine Lagereinrichtung 9 vorgesehen, die zwei mit Abstand voneinander an dem Fundament 4 angebrachte Lager 11 und 12 aufweist. Das Lager 11 enthält ein an dem Fundament 4 angebrachtes Stehlagerteil 13, dessen Lagerbohrung 14 mit einer Lagerbohrung 15 eines Stehlagerteils 16 fluchtet, das zu dem Schwenklager 12 gehört. Die beiden Lagerbohrungen 14 und 15 definieren eine horizontal verlaufende Schwenkachse 17, um die das Gestell 5 pendelnd schwenken kann.

Das Gestell 5 besteht aus einem Getriebegehäuse 18, an dessen Oberseite 19 parallel und im Abstand zwei aufwärts ragende Streben 21, 22 starr angebracht sind. Die Streben 21 und 22 tragen an ihrem oberen Ende zwei nach außen weisende Achsstummel 23 und 24, die in den Lagerbohrungen 14 und 15 leichtgängig drehbar sind.

An der Unterseite des Getriebegehäuses 18 befindet sich starr befestigt ein Betätigungsarm 25, der über eine Strebe 26 mit der Kraftmeßeinrichtung 8 gekuppelt ist. Dabei ist die Anordnung so getroffen, daß im kräftefreien Zustand die Schwenkachse 17 lotrecht über einer Verbindungsstelle 27 ist, an der die Strebe 26 mit dem Betätigungsarm 25 beweglich verbunden ist, sowie lotrecht über den Schwerpunkt des Gestells 5 ist.

In dem Getriebegehäuse 18 sind achsparallel zueinander zwei Wellen 28 und 29 drehbar gelagert, von denen die Welle 28 die Eingangswelle bildet, die über ein drehstarres Universalgelenk 31 mit der Ausgangswelle 3 des auszumessenden Prüflings kuppelbar ist. Dieses Universalgelenk 31 ist Teil einer nicht veranschaulichten Gelenkausgleichswelle.

Im Inneren des Getriebegehäuses 18 trägt die Eingangswelle 28 drehfest ein Stirnzahnrad 32, das mit einem zweiten Zahnrad 33 kämmt, das drehfest auf der die Ausgangswelle bildenden Welle 29 angeordnet ist. Beide Wellen 28 und 29 sind achsparallel zu der Schwenkachse 17.

Beide Wellen 28 und 29 haben Drehachsen 34 und 35, die übereinander in der Ebene liegen, die die Schwenkachse 17 und den Anlenkungspunkt 27 enthält, wobei die Drehachse 34 über der Achse 35 liegt.

3

Um die Pendelbewegung des Gestelles 5 nicht zu behindern, erfolgt die drehstarre Verbindung zwischen der Ausgangswelle 29 und einer Eingangswelle 36 der Antriebs- und Bremseinrichtung 7 über eine Gelenkausgleichswelle 37 mit zwei drehstarren Ausgleichsgelenkkupplungen 38 und 39. Die Antriebs- und Bremseinrichtung 7 ist beispielsweise ein Synchron- oder Asynchronmotor, der es gestattet, sowohl Leistung in den Prüfling 2 einzuspeisen als auch von dem Prüfling 2 abgegebene Leistung aufzunehmen und an das Netz zurückzuspeisen. Wenn mit der Meßeinrichtung 1 lediglich Belastungsmessungen durchgeführt werden sollen, bei denen der Prüfling 2 Leistung abgibt, so kann die Antriebs- und Bremseinrichtung 7 auch eine einfache Wirbelstrombremse oder beispielsweise eine Wasserwirbelbremse u.dgl. sein, also jede beliebige Einrichtung, mit der es möglich ist, Rotationsenergie in Wärme umzusetzen.

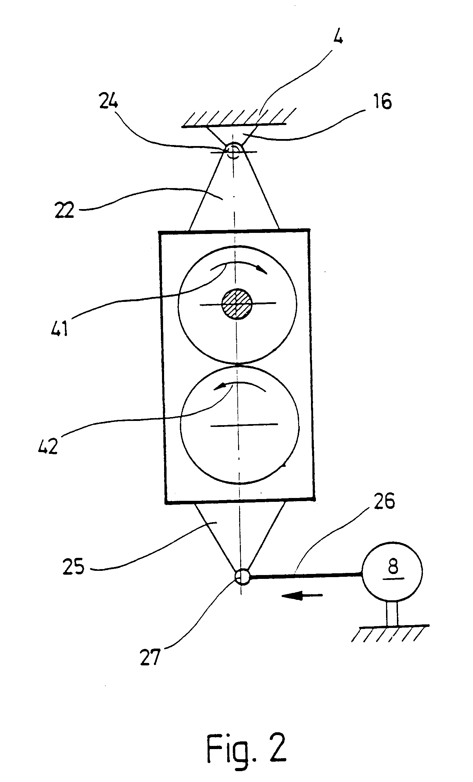

Die insoweit beschriebene Meßvorrichtung 1 arbeitet folgendermaßen: Der auf dem Fundament 4 verankerte Prüfling 2 wird so an die Eingangswelle 28 des Getriebes 6 angekuppelt, daß lediglich Drehmomente, jedoch keine Querkräfte eingeleitet werden, die gegenüber der Drehachse 34 immer den gleichen Azimutwinkel haben. Umlaufende Querkräfte lassen sich später durch Mittelwertbildung des gemessenen Wertes eliminieren und haben deswegen keinen Einfluß auf die Meßgenauigkeit. Zur Vereinfachung sei jedoch angenommen, daß die Drehmomenteinleitung an der Eingangswelle 28 querkraftfrei erfolgt. Es sei ferner angenommen, daß der Prüfling 2 die Eingangswelle 28, wie Fig. 2 zeigt, im Uhrzeigersinne, also in Richtung eines Pfeiles 41, antreibt. Die Ausgangswelle 29 dreht sich dann im Gegenuhrzeigersinn in Richtung eines Pfeiles 42.

Das von dem Getriebe 6 übertragene Drehmoment wird über die Ausgangswelle 29 zu der Antriebs- und Bremseinrichtung 7 ebenfalls querkraftfrei übertragen, wobei in der gezeigten Ausführungsform die Antriebs- und Bremseinrichtung 7 auf der dem Prüfling 2 gegenüberliegenden Seite des Gestelles 5 angebracht ist, weshalb die Eingangs- und die Ausgangswelle 28, 29 zu unterschiedlichen Seiten aus dem Getriebegehäuse 18 hervorstehen, in dem sie gelagert sind.

Wenn bei dieser Anordnung und Betriebsweise die Antriebs- und Bremseinrichtung 7 bremsend wirkt, also der Prüfling 2 Leistung an die Antriebs- und Bremseinrichtung 7 abgibt, entsteht an der Eingangswelle 28 ein Drehmoment $M_1$, das im Uhrzeigersinne wirkt. Wegen der bremsend wirkenden Antriebs- und Bremseinrichtung 7 und der gewählten Drehrichtung hat das Bremsmoment M2 an der Ausgangswelle 29 denselben Drehsinn wie das Drehmoment $M_1$. Es entstehen also zwei in der gleichen Richtung wirkende Momente $M_1$ und $M_2$, die bestrebt sind, das Gestell 5 im Uhrzeigersinne um die Schwenkachse 17 zu verschwenken. Hierdurch entsteht an der Verbindungsstelle 27 eine nach links gerichtete Kraft F, die ein Gegendrehmoment erzeugt entsprechend dem Hebelarm r, der der Abstand der Schwenkachse 17 von der Verbindungsstelle 27 ist, d.h. es gilt

$$rF = M_1 + M_2 \qquad (1)$$

Wenn die im Getriebe auftretenden Verluste vernachlässigbar sind, ist F unmittelbar ein Maß für das vom Prüfling 2 abgegebene Drehmoment unter der Voraussetzung, daß r sowie das übersetzungsverhältnis des Getriebes 6 konstant und bekannt sind. Das rückstellende Moment infolge der pendelnden Aufhängung bleibt dabei vereinfachend unberücksichtigt.

Wenn allerdings in dem Getriebe Verluste auftreten, die sowohl einen lastabhängigen als auch einen verlustunabhängigen Anteil haben, vermindert sich das Moment $M_2$, das an der Ausgangswelle 29 zur Verfügung steht, gemäß

$$M_2 = ü \, (M_1 - (f \, M_1 + M_{L1})), \qquad (2)$$

wobei ü das Übersetzungsverhältnis, also das Verhältnis der Zähnezahlen der beiden Stirnzahnräder 32 und 33, $f \, M_1$ das lastabhängige Verlustmoment und $M_{L1}$ das lastunabhängige Verlustmoment sind. Wird diese Beziehung umgeformt und in die obige Gleichung eingesetzt, ergibt sich unter der vereinfachenden Annahme ü = 1

$$F = \frac{(2 - f) \, M_1 - M_{L1}}{r} \qquad (3)$$

Wird dagegen der Prüfling 2 mittels der Meßeinrichtung 1 angetrieben, so kehren sich in der obigen Gleichung beide Vorzeichen um.

Demnach besitzt die in den Fig. 1 und 2 gezeigte Anordnung den wesentlichen Vorteil, daß die beiden Schwenklager 11 und 12 nur die sehr viel geringere Masse des Gestells 5 mit dem Getriebe 6 zu tragen brauchen, während die damit im Vergleich sehr schwere Antriebs- und Bremseinrichtung 7 getrennt und ortsunveränderbar auf dem Fundament 4 steht. Dementsprechend klein und reibungsarm können die beiden Lager 11 und 12 dimensioniert sein. Darüber hinaus ist die Anordnung auch deswegen empfindlicher, weil bei der Meßauslenkung des Gestells 5 wegen der geringeren Masse und des damit verbundenen, wesentlich geringeren Gewichtes eine deutlich geringere Rückstellkraft infolge der Pendelwirkung zustandekommt.

Würde dagegen die sehr massereiche Antriebs- und Bremseinrichtung 7 ebenfalls an dem Gestell 5 befestigt sein, würde den zu messenden Momenten $M_1$ und $M_2$ noch ein nennenswertes Moment überlagert sein, das bei der Auslenkung des Schwerpunktes aus der vertikalen Lage unterhalb der Schwenkachse 17 hinzukommt und bestrebt ist, die Anordnung in die vertikale Lage zurückzudrehen. Bei der gezeigten Anordnung ist die Masse sehr viel kleiner und folglich auch das erzeugte Drehmoment entsprechend geringer. Insbesondere haben bei der Verwendung von Wasserwirbelbremsen das Verhalten der Wasserfüllung bzw. die Kräfte an den Wasseranschlüssen keinen Einfluß auf die Meßgenauigkeit.

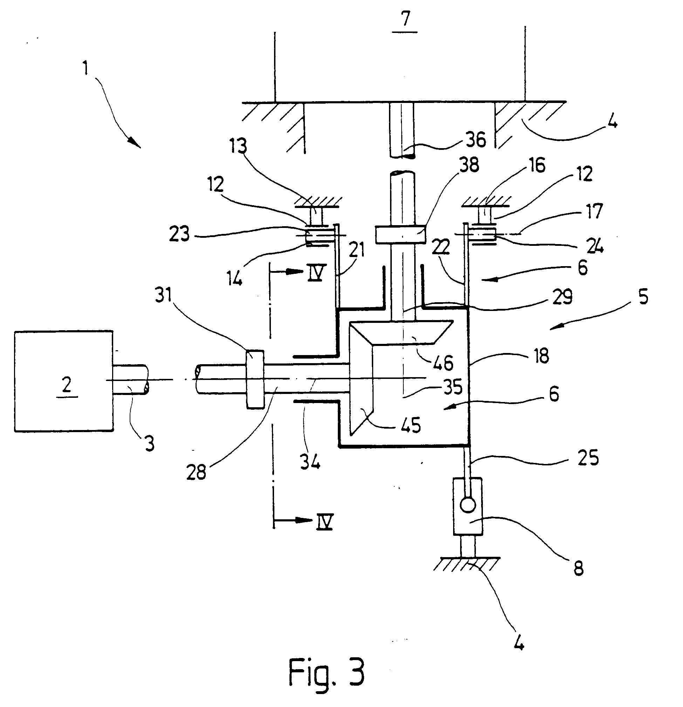

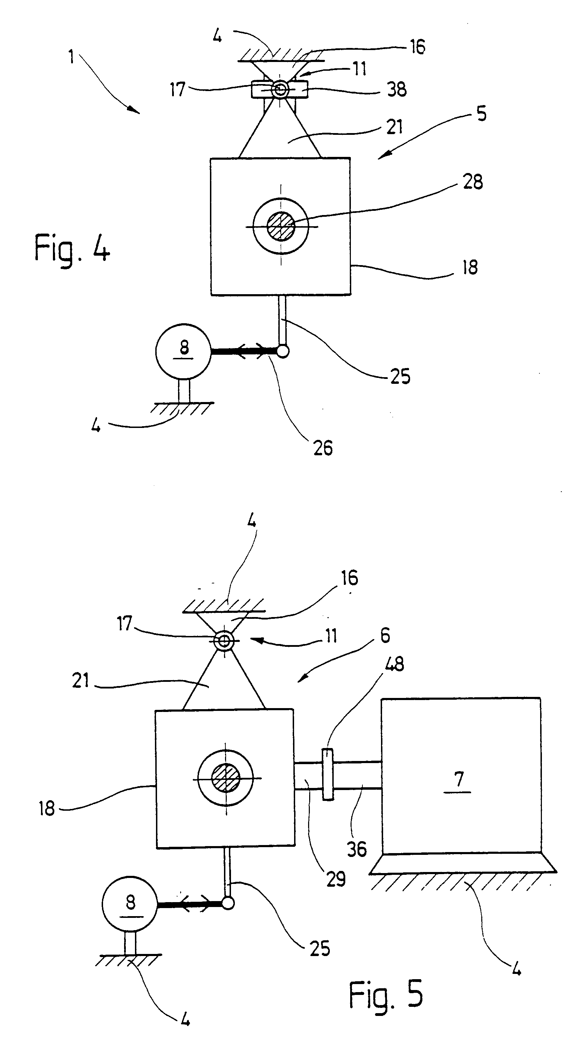

Wenn zusätzlich zu der Verbesserung der Meßgenauigkeit, die durch die Anordnung nach den Fig. 1 und 2 zustandekommt, auch noch der Einfluß der Getriebeverluste eliminiert werden soll, eignet sich die Anordnung nach den Fig. 3 und 4. Bei dieser Ausführungsform der Meßeinrichtung 1 sind für die aus den Fig. 1 und 2 bekannten Bauteile dieselben Bezugszeichen verwendet.

Der wesentliche Unterschied zwischen der Meßvorrichtung nach Fig. 1 und 2 einerseits und der Meßvorrichtung nach Fig. 3 und 4 andererseits besteht darin, daß die Ausgangswelle 29, die bei dem vorherigen Ausführungsbeispiel horizontal, d.h. achsparallel zu der Eingangswelle 28 angeordnet ist, nunmehr rechtwinklig zu der Eingangswelle 28 verläuft. Das Getriebe 6 ist ein einstufiges Kegelradgetriebe, von dem ein Kegelrad 45 drehfest mit der Eingangswelle 28 und das andere Kegelrad 46 drehfest mit der Ausgangswelle 29 verbunden ist. Aufgrund dieser Anordnung ist die an der Kraftmeßeinrichtung 8 gemessene Kraft nur noch proportional dem an der Eingangswelle 28 wirkenden Drehmoment $M_1$, denn das an der Ausgangswelle 29 auftretende Drehmoment $M_2$ liegt in einer Ebene, die keine Verschwenkung in den beiden Lagern 11 und 12 gestattet. Damit ist es auch gleichgültig, welche Verluste im Getriebe 5 auftreten, denn die Größe des Drehmomentes $M_2$ wirkt sich an der Kraftmeßeinrichtung 8 nicht mehr aus. Andererseits wird aber durch die Ausführungsform nach den Fig. 3 und 4 von den Vorteilen Gebrauch gemacht, die im Zusammenhang mit dem Ausführungsbeispiel nach den Fig. 1 und 2 erläutert sind, die zu einer Verbesserung der Meßgenauigkeit führen.

Bei der Ausführungsform nach Fig. 3 verläuft die Ausgangswelle 29 vertikal, und zwar so, daß die Drehachse 35 der Ausgangswelle 29 die Schwenkachse 17 rechtwinklig schneidet. Damit können an der Ausgangswelle 29 wirksame Zug- oder Druckkräfte kein Moment bezüglich der Schwenkachse 17 hervorrufen, also den Meßwert nicht verfälschen.

Bei der Messung des von dem Prüfling 2 aufgenommenen oder abgegebenen Drehmomentes entsteht eine Verschwenkung des Gestells 5 um die Schwenkachse 17, deren Amplitude von der Meßcharakteristik der Kraftmeßeinrichtung 8 abhängig ist. Selbst wenn eine sehr kleine Verschwenkung zustandekommt, ist es erforderlich, zwischen der Ausgangswelle 29 und der Eingangswelle 28 der Antriebs- und Bremseinrichtung 7, die sich im gezeigten Ausführungsbeispiel oberhalb der Schwenkachse 17 auf dem Fundament 4 befindet, zumindest eine drehstarre Gelenkausgleichskupplung 38 zu verwenden. Diese Ausgleichskupplung 38 ist wiederum, um die Krafteinleitung möglichst zu vermindern und Fluchtungsfehler zu vermeiden, mit dem Gelenkpunkt auf der Schwenkachse 17 angeordnet. Ein geringes Verwinkeln der Eingangswelle 36 der Antriebs- und Bremseinrichtung 7 in der Zeichenebene gegenüber der Ausgangswelle 29 hat dabei auf den Meßvorgang und die Meßgenauigkeit praktisch keinen Einfluß, dient aber der Verbesserung der Schmierung, wenn als Drehstarrgelenkausgleichskupplung 38 ein homokinetisches Gelenk verwendet wird.

Da es aufgrund der obigen Überlegungen nur darauf ankommt, daß die Eingangs- und die Ausgangswelle 28, 29 rechtwinklig zueinander verlaufen, ist es gleichgültig, ob ihre zugehörigen Drehachsen 34, 35, wie bei dem Ausführungsbeispiel nach den Fig. 3 und 4 einander schneiden oder gegeneinander versetzt sind, wie dies beispielsweise bei hypoidverzahnten Kegelrädern der Fall ist. Günstig ist lediglich, wenn im kraftfreien Zustand der Schwerpunkt des Gestells 5 samt allen seinen angebrachten Einrichtungen senkrecht unterhalb der Schwenkachse 17 sich befindet, damit die Kraftmeßeinrichtung 8 im lastfreien Zustand kräftefrei ist.

Bei dem in Fig. 5 gezeigten Ausführungsbeispiel verläuft die Ausgangswelle 29 nicht vertikal die Drehachse 17 schneidend, sondern horizontal, weshalb die Antriebs- und Bremseinrichtung 7 nun seitlich neben dem pendelnd aufgehängten Gestell 5 angeordnet ist. Bei nur kleinen Schwenkbewegungen tritt zwischen der Ausgangswelle 29 und der Eingangswelle 36 praktisch kein Winkelfehler auf, weshalb beide Wellen über ein drehstarres Schubstück 48 miteinander gekuppelt werden können, ohne daß unerwünschte Kräfte in das Gestell 4 eingeleitet werden. Ansonsten ist die Anordnung, wie vorher beschrieben, weshalb auch dieselben Bezugszeichen verwendet sind.

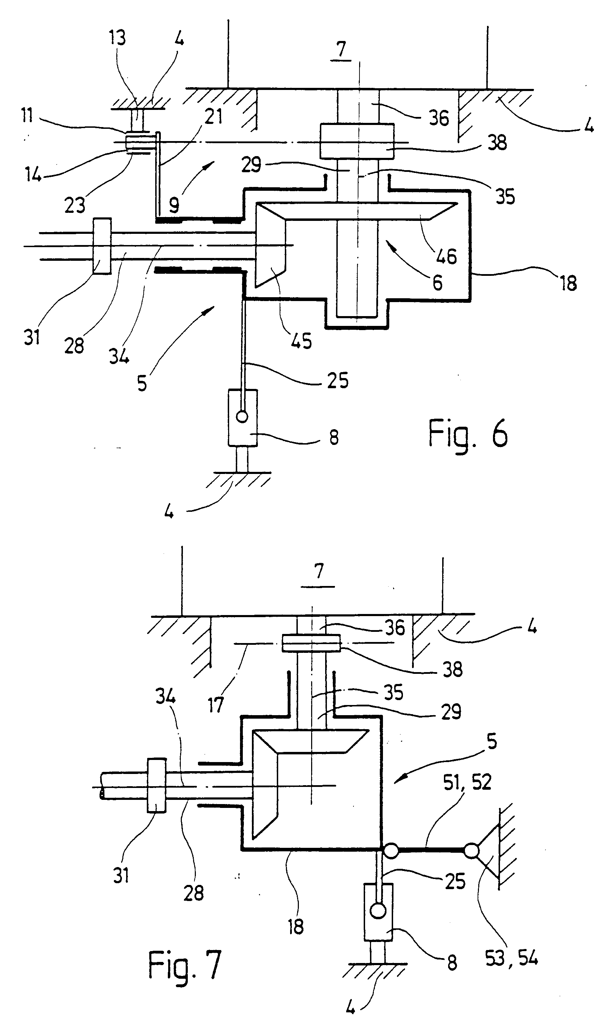

Fig. 6 zeigt ein Ausführungsbeispiel, das sich hinsichtlich der Ausgestaltung der Lagereinrichtung 9 von dem Ausführungsbeispiel nach den Fig. 3 und 4 unterscheidet. Im übrigen sind wieder bereits beschriebene Bauteile mit denselben Bezugszeichen versehen und nicht erneut beschrieben.

Die Lagereinrichtung 9 in Fig. 6 besteht einerseits aus dem bereits beschriebenen Schwenklager 11 während das andere Schwenklager von der drehstarren Gelenkausgleichskupplung 38 gebildet ist. Das Gewicht des Gestells 6 wird also einerseits von dem Schwenklager 11 und andererseits ausschließlich von der drehstarren Gelenkausgleichskupplung 38 aufgenommen. Diese Anordnung erübrigt Vorkehrungen zum Längenausgleich, wie sie erforderlich sind, wenn die Schwenkachse 17 durch die beiden Lager 11 und 12 zwangsweise definiert wird und sich durch die drehstarre Gelenkausgleichskupplung 38 eine statische Überbestimmung ergeben würde, wenn kein selbsttätiger Längenausgleich erfolgt.

Weiterhin zeigt Fig. 6, daß das Getriebe 5 auch ein von 1 verschiedenes Übersetzungsverhältnis aufweisen kann, denn das Kegelrad 45 weist einen wesentlich kleineren Durchmesser auf als das Kegelrad 46. Auf das zu messende Drehmoment hat dies keinen Einfluß. Es gestattet lediglich, den Drehzahlbereich des Prüflings 2 besser an den Drehzahlbereich der Antriebs- und Bremseinrichtung 7 anpassen zu können.

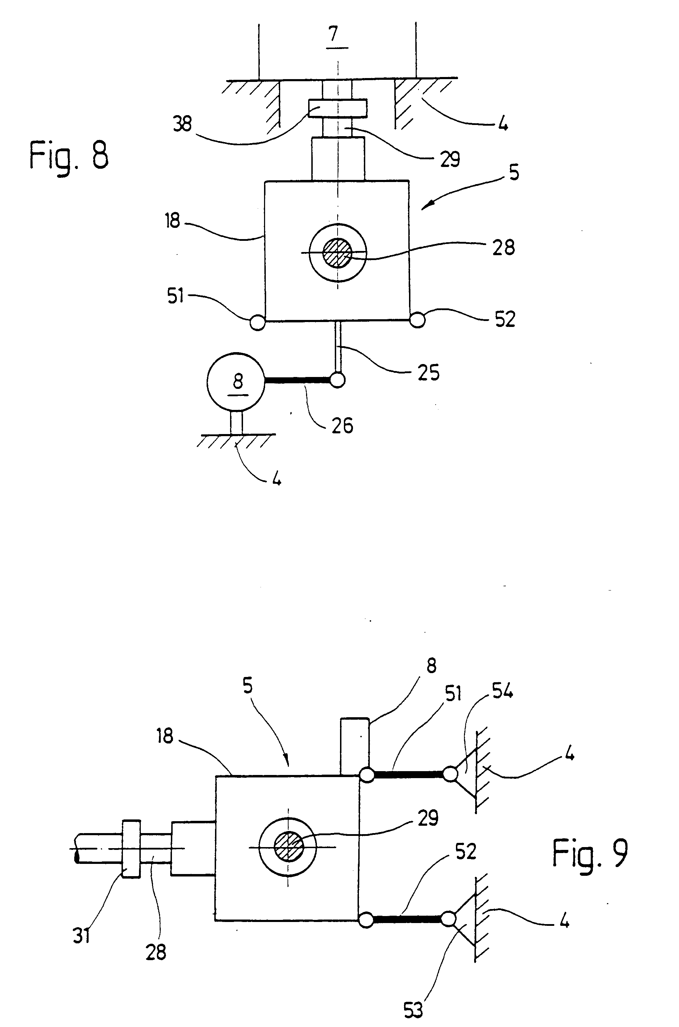

Bei dem Ausführungsbeispiel nach den Fig. 7 bis 9 besteht schließlich die Lagereinrichtung 9, die die Schwenkachse 17 definiert, ausschließlich aus der drehstarren Gelenkausgleichskupplung 38, über die das Gestell 5 mittels der Ausgangswelle 29 schwenkbar an der Eingangswelle 36 der Antriebs-und Bremseinrichtung 7 aufgehängt ist, die sich ortsfest auf dem Fundament 4 verankert, über dem Gestell 5 befindet. Die Gelenkausgleichskupplung ist hierbei ein eine Axialkraft aufnehmendes Kreuz- oder Kardangelenk. Das um die Drehachse der Ausgangswelle 29 auftretende Drehmoment wird bei diesem Ausführungsbeispiel von Längslenkern 51 und 52 aufgenommen, die parallel zu der Drehachse 34 der Eingangswelle 28 mit Abstand voneinander verlaufend vorgesehen sind. Die Längslenker 51 und 52 greifen bezüglich der Drehachse 35 mit dem gleichen Hebelarm an dem Gestell 5 an. Diese Längslenker 51, 52 sind an der der Eingangswelle 28 gegenüberliegenden Seite des Getriebegehäuses 18 angelenkt und stützen sich gelenkig an entsprechenden Lagern 53 und 54 des Fundamentes 4 ab. Das Gestell 5 ist dadurch in der Lage, eine pendelnde Schwenkbewegung zu vollführen, wobei die Pendelbewegung in einer Ebene stattfindet, die die Eingangswelle 28 senkrecht schneidet. Andere Bewegungen werden von den Lenkern 51, 52 verhindert. Damit arbeitet die Meßanordnung 1 nach den Fig. 7 bis 9, wie dies im Zusammenhang mit den Fig. 3 und 4 beschrieben ist.

## Patentansprüche

1.  Vorrichtung zum Messen des von einem Prüfling (2) abgegebenen und/oder aufgenommenen Drehmomentes, mit einem Fundament (4), an dem über eine Schwenklagereinrichtung (9) ein um eine Schwenkachse (17) schwenkbares Gestell (5) gelagert ist, mit einer zum Anschluß des Prüflings (2) vorgesehenen Eingangswelle (28), die in dem Gestell (5) achsparallel zu der Schwenkachse drehbar gelagert und an die ein Getriebe (6) angekuppelt ist, über das Leistung einer Brems- und/oder Antriebseinrichtung (7) von oder zu der Eingangswelle (28) gelangt, sowie mit wenigstens einer an dem Gestell (5) angreifenden Kraftmeßeinrichtung (8), dadurch gekennzeichnet, daß die Brems- und/oder Antriebseinrichtung (7 ) außerhalb des Gestells (5 ) an dem Fundament (4 ) verankert ist und daß das Getriebe (6) eine in dem Gestell (5 ) gelagerte Ausgangswelle (29) aufweist, an die die Brems- und/oder Antriebseinrichtung (7 ) drehfest angekuppelt ist.

2.  Vorrichtung nach Anspruch 1 dadurch gekennzeichnet, daß die Ausgangswelle (29) unter einem von null verschiedenen Winkel gegenüber der Eingangswelle (28) verläuft.

3.  Vorrichtung nach Anspruch 2, dadurch gekennzeichnet, daß die Ausgangswelle (29) unter einem Winkel von 90° gegenüber der Eingangswelle (28) verläuft.

4.  Vorrichtung nach Anspruch 2, dadurch gekennzeichnet, daß die Achse (35) der Ausgangswelle (29) und die Achse (34) der Eingangswelle (28) in einer gemeinsamen Ebene liegen.

5.  Vorrichtung nach Anspruch 2, dadurch gekennzeichnet, daß die Achse (34) der Eingangswelle (28) in einer Ebene liegt, die parallel zu einer Ebene verläuft, in der die Achse (35) der Ausgangswelle (29) liegt.

6. Vorrichtung nach Anspruch 2, dadurch gekennzeichnet, daß die Achse (35) der Ausgangswelle (29) die Schwenkachse (17) schneidet.

7. Vorrichtung nach den Ansprüchen 4 oder 5, dadurch gekennzeichnet, daß die Ebene, in der die Achse (35) der Ausgangswelle (29) liegt, rechtwinklig eine Ebene schneidet, die die Schwenkachse (17) enthält, und die auf der Ebene, in der die Achse (34) der Eingangswelle (28) liegt, senkrecht steht.

8. Vorrichtung nach Anspruch 1, dadurch gekennzeichnet, daß die Eingangswelle (28) unterhalb der Schwenkachse (17) angeordnet ist.

9. Vorrichtung nach Anspruch 1, dadurch gekennzeichnet, daß die Achse (34) der Eingangswelle (28) in einer Ebene liegt, die die Schwenkachse (17) sowie den Schwerpunkt des Gestells (5 ) mit allen seinen daran befestigten Einrichtungen enthält.

10. Vorrichtung nach Anspruch 1, dadurch gekennzeichnet, daß die Ausgangswelle (29) des Getriebes (6) mit der Brems- und/oder Antriebseinrichtung (7 ) über wenigstens eine drehstarre Gelenkausgleichskupplung (38, 39) gekuppelt ist.

11. Vorrichtung nach Anspruch 10, dadurch gekennzeichnet,daß die drehstarre Gelenkausgleichskupplung (38, 39) ein Kreuzgelenk ist.

12. Vorrichtung nach Anspruch 10, dadurch gekennzeichnet, daß die drehstarre Gelenkausgleichskupplung (38, 39) ein Gleichlaufgelenk ist.

13. Vorrichtung nach Anspruch 10, dadurch gekennzeichnet, daß die drehstarre Gelenkausgleichskupplung (38) einen Schwenkmittelpunkt aufweist, der auf der Schwenkachse (17) der Schwenklagereinrichtung (9) liegt.

14. Vorrichtung nach Anspruch 1, dadurch gekennzeichnet, daß die Schwenklagereinrichtung (9) wenigstens ein zwei gelenkig miteinander verbundene Lagerteile (13, 23; 16, 24) aufweisendes Lager (11, 12, 38) enthält, von denen der eine (13, 16) mit dem Fundament (4) und der andere (23, 24) mit dem Gestell (5) verbunden ist.

15. Vorrichtung nach Anspruch 14, dadurch gekennzeichnet, daß die Schwenklagereinrichtung (9) ein weiteres Lager (11, 12) mit zwei gelenkig verbundenen Lagerteilen (13, 23; 16, 24) enthält, von denen der eine (13, 16) mit dem Fundament (4) und der andere (23, 24) mit dem Gestell (5) verbunden ist und daß die beiden Lager (11, 12) längs der Schwenkachse (17) im Abstand voneinander angeordnet sind.

16. Vorrichtung nach den Ansprüchen 10 und 14, dadurch gekennzeichnet, daß die Schwenklagereinrichtung (9) als ein weiteres Lager die drehstarre Gelenkausgleichskupplung (38) enthält, die längs der Schwenkachse (17) im Abstand von dem ersten Lager (11) angeordnet ist.

17. Vorrichtung nach Anspruch 10, dadurch gekennzeichnet, daß die Schwenklagereinrichtung (9) ausschließlich von der drehstarren Gelenkausgleichskupplung (38) gebildet ist, und daß das Gestell (6 ) über zwei parallel und im Abstand zueinander verlaufende Lenker (51, 52), die sich parallel zu der Achse (34) der Eingangswelle (28) erstreckend, an dem Fundament (4 ) einer Drehung um die Ausgangswelle (29) entgegenwirkend abgestützt ist.

**Claims**

1. Apparatus for measuring the torque generated and/or absorbed by a machine (2) under test, comprising a base (4), on which a frame (5) is supported to swivel about a pivot axis (17) by means of a swivel bearing means (9), an input shaft (28) provided for coupling with the machine (2) under test, which input shaft is rotatably mounted in said frame (5) axis parallel to said pivot axis and to which a gear (6) is coupled, by means of of which power from a braking and/or drive means (7) is transmitted from or to said input shaft (28), and at least one force measuring means (8) connected to said frame (5), characterised in that said braking and/or drive means (7) is secured to said base (4) outside said frame

EP 0 357 879 B1

(5); and that said gear (6) has an output shaft (29) mounted in said frame (6), to which said braking and/or drive means (7) is coupled to be rotationally fixed.

2. Apparatus according to Claim 1, characterised in that the output shaft (29) extends at an angle other than zero in relation to the input shaft (28).

3. Apparatus according to Claim 2, characterised in that the output shaft (29) extends at an angle of 90° in relation to the input shaft (28).

4. Apparatus according to Claim 2, characterised in that the axis (35) of the output shaft (29) and the axis (34) of the input shaft (28) lie in a common plane.

5. Apparatus according to Claim 2, characterised in that the axis (34) of the input shaft (28) lies in a plane running parallel to a plane, in which the axis (35) of the output shaft (29) lies.

6. Apparatus according to Claim 2, characterised in that the axis (35) of the output shaft (29) intersects the pivot axis (17).

7. Apparatus according to Claim 4 or 5, characterised in that the plane in which the axis (35) of the output shaft (29) lies, intersects a plane containing the pivot axis (17) at right angles, said latter plane standing vertically on the plane in which the axis (34) of the input shaft (28) lies.

8. Apparatus according to Claim 1, characterised in that the input shaft (28) is arranged below the pivot axis (17).

9. Apparatus according to Claim 1, characterised in that the axis (34) of the input shaft (28) lies in a plane containing the pivot axis (17) and the centre of gravity of the frame (5) with all its devices attached.

10. Apparatus according to Claim 1, characterised in that the output shaft (29) of the gear (6) is coupled to the braking and/or drive means (7) by means of at least one non-rotatable joint coupling (38, 39).

11. Apparatus according to Claim 10, characterised in that the non-rotatable joint coupling (38, 39) is a universal joint.

12. Apparatus according to Claim 10, characterised in that the non-rotatable joint coupling (38, 39) is a homokinetic joint.

13. Apparatus according to Claim 10, characterised in that the non-rotatable joint coupling (38) has a central pivot point which lies on the pivot axis (17) of the swivel bearing means (9).

14. Apparatus according to Claim 1, characterised in that the swivel bearing means (9) is provided with at least one bearing (11, 12, 38) having two bearing portions (13, 23; 16, 24) pivoted to one another, one (13, 16) of which is connected to the base (4) and the other (23, 24) to the frame (5).

15. Apparatus according to Claim 14, characterised in that the swivel bearing means (9) is provided with a further bearing (11, 12) having two bearing portions (13, 23; 16, 24) pivoted to one another, one (13, 16) of which is connected to the base (4) and the other (23, 24) to the frame (5); and that the two bearings (11, 12) are arranged at a distance from one another along the pivot axis (17).

16. Apparatus according to Claims 10 and 14, characterised in that the swivel bearing means (9)contains the non-rotatable joint coupling (38) as a further bearing, which is arranged at a distance from the first bearing (11) along the pivot axis (17).

17. Apparatus according to Claim 10, characterised in that the swivel bearing means (9) is exclusively formed from the non-rotatable joint coupling (38); and that the frame (6) is supported on the base (4) by means of two parallel guide rods (51, 52) running at a distance from one another and extending parallel to the axis (34) of the input shaft (28), to oppose rotation around the output shaft (29).

8

**Revendications**

1. Dispositif pour mesurer le couple fourni et /ou absorbé par une machine d'essai (2), comprenant une base de fondation (4) sur laquelle un bâti (5) est monté pivotant autour d'un axe de pivotement (17) à l'aide d'un dispositif de palier de pivotement (9), un arbre d'entrée (28) qui est prévu pour le raccordement de la machine d'essai (2), qui est monté en rotation dans le bâti (5), son axe étant parallèle à l'axe de pivotement, et qui est accouplé avec un train d'engrenages (6) par lequel la puissance d'un dispositif de freinage et/ou d'entraînement (7) est transmis de ou à l'arbre d'entrée (28), ainsi qu'au moins un dispositif de mesure de force (8) agissant sur le bâti (5), caractérisé par le fait que le dispositif de freinage et /ou d'entraînement (7) est ancré sur la base de fondation (4) à l'extérieur du bâti (5) et que le train d'engrenages (6) présente un arbre de sortie (29) qui est monté sur le bâti (5) et auquel le dispositif de freinage et/ou d'entraînement (7) est accouplé de façon rigide en torsion.

2. Dispositif suivant la revendication 1, caractérisé par le fait que l'arbre de sortie (29) s'étend par rapport à l'arbre d'entrée (28) sous un angle différent de zéro.

3. Dispositif suivant la revendication 2, caractérisé par le fait que l'arbre de sortie (29) s'étend par rapport à l'arbre d'entrée (28) sous un angle de 90°.

4. Dispositif suivant la revendication 2, caractérisé par le fait que l'axe (35) de l'arbre de sortie (29) et l'axe (34) de l'arbre d'entrée (28) sont situés dans un plan commun.

5. Dispositif suivant la revendication 2, caractérisé par le fait que l'axe (34) de l'arbre d'entrée (28) est situé dans un plan qui s'étend parallèlement à un plan dans lequel se trouve l'axe (35) de l'arbre de sortie (29).

6. Dispositif suivant la revendication 2, caractérisé par le fait que l'axe (35) de l'arbre de sortie (29) coupe l'axe de pivotement (17).

7. Dispositif suivant les revendications 4 ou 5, caractérisé par le fait que le plan dans lequel se trouve l'axe (35) de l'arbre de sortie (29) coupe perpendiculairement un plan qui contient l'axe de pivotement (17) et qui est perpendiculaire au plan dans lequel se trouve l'axe (34) de l'arbre d'entrée (28).

8. Dispositif suivant la revendication 1, caractérisé par le fait que l'arbre d'entrée (28) est disposé en dessous de l'axe de pivotement (17).

9. Dispositif suivant la revendication 1, caractérisé par le fait que l'axe (34) de l'arbre d'entrée (28) est situé dans un plan qui contient l'axe de pivotement (17) ainsi que le centre de gravité du bâti (5) avec tous les dispositifs fixés sur ce dernier.

10. Dispositif suivant la revendication 1, caractérisé par le fait que l'arbre de sortie (29) du train d'engrenages (6) est accouplé avec le dispositif de freinage et /ou d'entraînement (7) par au moins un accouplement de compensation articulé (38, 39) rigide en torsion.

11. Dispositif suivant la revendication 10, caractérisé par le fait que l'accouplement de compensation articulé (38, 39) rigide en torsion est un joint à croisillon.

12. Dispositif suivant la revendication 10, caractérisé par le fait que l'accouplement de compensation articulé (38, 39) rigide en torsion est un joint homocinétique.

13. Dispositif suivant la revendication 10, caractérisé par le fait que l'accouplement de compensation articulé (38) rigide en torsion présente un centre de pivotement qui se trouve sur l'axe de pivotement (17) du dispositif de palier de pivotement (9).

14. Dispositif suivant la revendication 1, caractérisé par le fait que le dispositif de palier de pivotement (9) comprend au moins un palier (11, 12, 38) présentant deux parties de palier (13, 23; 16, 24) reliées de façon articulée entre elles, parmi lesquelles l'une (13, 16) est reliée à la base de fondation (4) et l'autre (23, 24) au bâti (5).

**15.** Dispositif suivant la revendication 14, caractérisé par le fait que le dispositif de palier de pivotement (9) comprend un autre palier (11, 12) avec deux parties de palier (13, 23; 16, 24) reliées de façon articulée, dont l'une (13, 16) est reliée à la base de fondation (4) et l'autre (23, 24) au bâti (5) et que les deux paliers (11, 12) sont disposés à distance l'un de l'autre le long de l'axe de pivotement (17).

**16.** Dispositif suivant les revendications 10 et 14, caractérisé par le fait que le dispositif de palier de pivotement (9) contient, en tant qu'autre palier, l'accouplement de compensation articulé (38) rigide en torsion, qui est disposé à distance du premier palier (11) le long de l'axe de pivotement (17).

**17.** Dispositif suivant la revendication 10, caractérisé par le fait que le dispositif de palier de pivotement (9) est constitué exclusivement par l'accouplement de compensation articulé (38) rigide en torsion, et que le bâti (5) s'appuie sur la base de fondation (4) par deux bielles (51, 52) parallèles, à distance l'une de l'autre, s'étendant parallèlement à l'axe (34) de l'arbre d'entrée (28), de manière à s'opposer à une rotation autour de l'axe de sortie (29).

Fig. 1

EP 0 357 879 B1

Fig. 2

Fig. 3

Fig. 4

Fig. 5

Fig. 6

Fig. 7

Fig. 8

Fig. 9